# EUROPEAN PATENT APPLICATION

(11) **EP 2 803 979 A1**
(43) Date of publication of application: **19.11.2014**
(21) Application number: 13175520.9
(22) Date of filing: 08.07.2013
(51) Int. Cl.: G01N 21/958

(54) **Control method of laminated glasses with resistance wire and a system for the method thereof**

(30) Priority: 17.05.2013 TR 201305921
(71) Applicant: Arslan, Idris, Bursa (TR)
(72) Inventor: Arslan, Idris, Bursa (TR)
(74) Representative: Iskender, Ibrahim

(57) **Abstract**

The present invention is a system that is generally used as vehicle windshield, which enables to control the suitability of laminated glasses (1), comprises an outer glass (2), an inner glass (3), a binding layer (6), a conductive member (5) and resistance wires (4), and characterized in that it comprises an energy source (7) providing energy for said laminated glass (1); conductive cables (8) transferring the energy received from the energy source (7) to the laminated glass (1); a light source (10) reflecting the images of resistance wires (4) on said laminated glass (1); and a reflection surface (11) on which the image of laminated glass (1) is reflected. The present invention is a method that is generally used as vehicle windshield, which enables to control the suitability of laminated glasses (1) comprised of an outer glass (2), an inner glass (3), a binding layer (6), a conductive member (5) and resistance wires (4), and characterized in that it comprises the process steps of providing energy for the laminated glass (1) by means of an energy source (7), reflecting the shadows of resistance wires (4) on the energized laminated glass (1) onto a reflection surface (11) via a light source (10) and performing suitability control in accordance with the shadows read on reflection surface (11).

## Description

### TECHNICAL FIELD

The present invention is related to laminated glasses with resistance wire used generally in the vehicles.

The present invention is especially related to the control method enabling to control the suitability of resistance wires, for laminated and heated glasses with resistance wire, and related to a system for said method.

### STATE OF ART

The laminated glasses are obtained by combining two glasses by means of a binding layer. Laminating the glass increases the resistance and decreases the brittleness. The windshield is required to be less tough in order to prevent the glass from being shattered and the possible injuries. Furthermore, said glasses prevent the disruption in visibility in case of cracks and fractures as they are standard non-tempered bend glasses. Therefore, windshields of vehicles are especially laminated for security purposes.

Today, problems such as misting, frosting or snowing on windshields especially in the cold and in winter are experienced. In order to eliminate said problems, heating the glasses has been considered and laminated glasses with resistance wire have been developed. Said laminated glasses with resistance wire are obtained by arraying the resistance wires that serve as heater, on the layer combining two glasses in an appropriate order, and combining the glasses. As it is costly to replace the laminated glasses with resistance wire are due to the defects occurring after the usage, they are required to be subjected to suitability control before being transferred to the final place of use.

In laminated glasses with resistance wire, the resistance wires arrayed on the intermediate binding layer have very fine structures not to disrupt visibility and are numerous to ensure homogeneous heating. It is considerably difficult or impossible to count said resistance wires, measure the gaps thereof, detect the broken wires, measure the distance between the wires and glass edges, determine the correct arraying of wires and perform similar controls visually.

Suitability control of said resistance wire laminated glasses cannot be performed in proper manner in the state of art. The control performed visually is not reliable.

Studies regarding the determination of heat density distribution in the laminated glasses are present in the state of art. In said studies, it is aimed to give energy to the wires and to detect the heat density distribution created by energized wires on the glass by means of thermal camera. However, the energy given to the wires cannot be adjusted in exact amount in said method and the whole glass surface is seen same on the thermal camera due to over energy of the wires and measurement precision is lost. In addition, whether the broken wires remain within the allowed limits cannot be figured out, it is interpreted as manufacturing defect.

A method or patent developed in order to solve the present problems has not been encountered in the researches made and it is seen that performing a full measurement is impossible.

In conclusion, improvements are made in the control of laminated glasses with resistance wire and therefore, new embodiments eliminating the above mentioned disadvantages and offering solutions for the present systems are needed.

### OBJECT OF THE INVENTION

The present invention is related to a control method satisfying the above mentioned requirements, eliminating all the disadvantages and offering additional advantages, and the system ensuring thereof.

The primary object of the present invention is to enable the suitability control of laminated glasses with resistance wire to be performed in an accurate manner after they are manufactured.

Another object of the present invention is to control the strength suitability of laminated glasses with resistance wire as a whole or the heating of the groups created under fixed voltage.

Another object of the present invention is to control voltage values drawn by laminated glasses with resistance wire as a whole or the heating of the groups created under fixed voltage.

Another object of the present invention is to control whether the resistance wires are secured or broken.

Another object of the present invention is to control the number and arraying of secured or broken resistance wires.

Another object of the present invention is to control whether the resistance wires are provided on defined areas on the glass.

Another object of the present invention is to control the period of energy application on the resistance wires and to determine the heat density difference accurately via thermal camera.

Another object of the present invention is to control the whole resistance wire laminated glass or separate heating groups created on the glass.

An object of the present invention is to enable the control of laminated glasses with resistance wire by means of automation and thus, to eliminate the man-made mistakes.

Another object of the present invention is to control the one or more area/areas in the direction defined on laminated glasses with resistance wire simultaneously or in different times by means of one or more camera/cameras.

Another object of the present invention is to prevent the defective glasses detected during the control from being transferred to the final place of use and thus, to prevent the costs that will later occur due to replacing the defective glass.

In order to achieve all the advantages mentioned above and to be understood from the detailed description below, the present invention is a system that is generally used as vehicle windshield, which enables to control the suitability of laminated glasses comprised of an outer glass, an inner glass, a binding layer, a conductive member and resistance wires, and it comprises;
- an energy source providing energy for said laminated glass,
- conductive cables transferring the energy received from energy source to the laminated glass,
- A light source enabling the images of resistance wires on said laminated glass to be reflected,
- a reflection surface through which the image of laminated glass is reflected.

A preferred embodiment of the present invention comprises energy transfer ratchet in order to connect the conductive cables with the conductive member provided on the laminated glass.

A preferred embodiment of the present comprises a cabinet in order to enable the system to be separated from the outer environment and the control to be performed in a dark environment.

A preferred embodiment of the present invention enables said control to be performed as automation by means of a control board.

A preferred embodiment of the present invention enables the shadow images received from the reflection surface to be transferred to the control board via an imaging device.

In a preferred embodiment of the present invention, the laminated glass is moved by means of a carrier member carrying the laminated glass and having mobility, and partial image reading is performed on big glasses.

In a preferred embodiment of the present invention, partial image reading is performed on the systems wherein the laminated glass is fixed, because the carrier body to which light source, reflection surface and imaging device are connected.

In a preferred embodiment of the present invention, said carrier member and carrier body are moved by means of a drive member.

In order to achieve all the advantages mentioned above and to be understood from the detailed description below, the present invention is a method that is generally used as vehicle windshield, which enables to control the suitability of laminated glasses comprised of an outer glass, an inner glass, a binding layer, a conductive member and resistance wires, and it comprises the following process steps;
- Providing energy for the laminated glass via an energy source,
- Reflecting the shadows of resistance wires on the energized laminated glass on a reflection surface via a light source,
- Performing suitability control in accordance with the shadow images read on reflection surface.

In a preferred embodiment of the present invention, said control method comprises the process step of transferring shadow images occurring on the reflection surface to the control board by means of an imaging device.

In a preferred embodiment of the present invention, said control method comprises the process step of performing the suitability control of shadow images received from the imaging device on control board by means of camera software and PC and/or PLC hardware.

The structural and characteristic features and all the advantages of the present invention will be more clearly understood thanks to the figures below and the detailed description written with reference to those figures. Therefore, the evaluation needs to be done by taking said figures and the detailed description into consideration.

### BRIEF DESCRIPTION OF THE FIGURES

In order for the structure and all the advantages of the present invention to be understood together with the additional members, it is required to be evaluated with the figures described below.

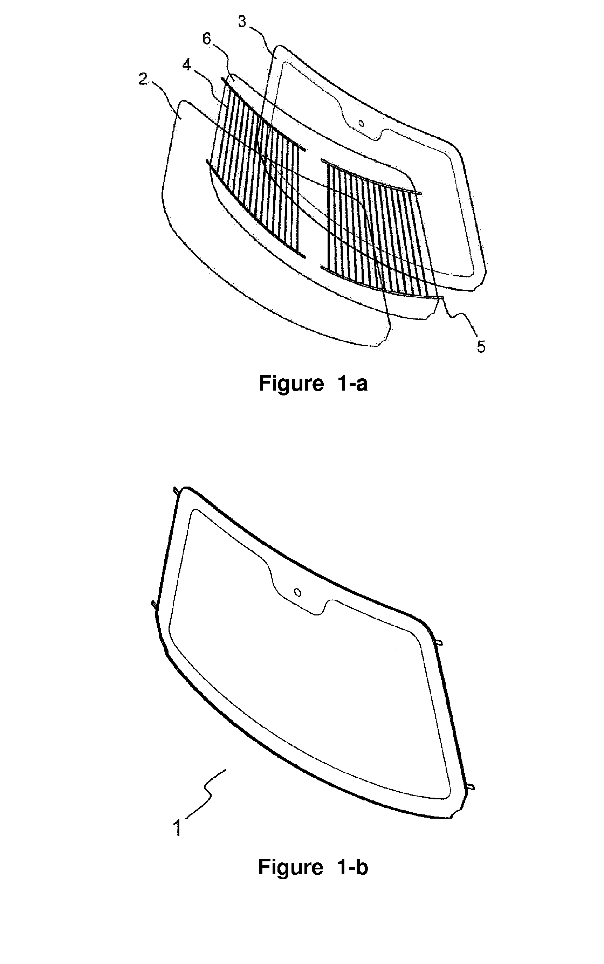

Figure 1-a is the demounted view of laminated glasses with resistance wire.
Figure 1-b is the mounted view of laminated glasses with resistance wire.
Figure 2 is the perspective view of the control system according to the present invention.

### REFERENCE NUMERALS

1. Laminated glass
2. Outer glass
3. Inner glass
4. Resistance wire
   4.1. Thick and dark shadow
   4.2. Thin and faint shadow
5. Conductive member
6. Binding layer
7. Energy source
8. Conductive cable
9. Energy transfer ratchet
10. Light source
11. Reflection surface
12. Imaging device
13. Control board
14. Cabinet
15. Drive member
16. Carrier member
17. Carrier member
18. Carrier member
19. Carrier body
20. Carrier body

### DETAILED DESCRIPTION OF THE PRESENT INVENTION

In this detailed description, the control method according to the present invention and the preferred embodiments of the system ensuring said control are described only for the subject to be understood better without any limiting effect.

The present invention is a system that is generally used as vehicle windshield, which enables to control the suitability of laminated glasses (1) comprised of an outer glass (2), an inner glass (3), a binding layer (6), a conductive member (5) and resistance wires (4) and **characterised in that** it comprises;
- An energy source (7) providing energy for said laminated glass (1),
- Conductive cables (8) transferring the energy received from energy source (7) to the laminated glass (1),
- A light source (10) enabling the images of resistance wires (4) on said laminated glass (1) to be reflected,
- A reflection surface (11) through which the image of laminated glass (1) is reflected.

Figure 1-a is the demounted view of the laminated glass (1). The laminated glass (1) comprises an outer glass (2), an inner glass (3), a binding layer (6) positioned between said outer glass (2) and inner glass (3), resistance wires (4) and conductive member (5). The resistance wires (4) are arrayed on the binding layer (6) in an appropriate manner. The conductive member (5) interconnecting the wires (4) are used in order to provide energy for the resistance wires (4). The ends of the conductive member (5) are provided so as to remain outside after the combination in order to ensure energy connection.

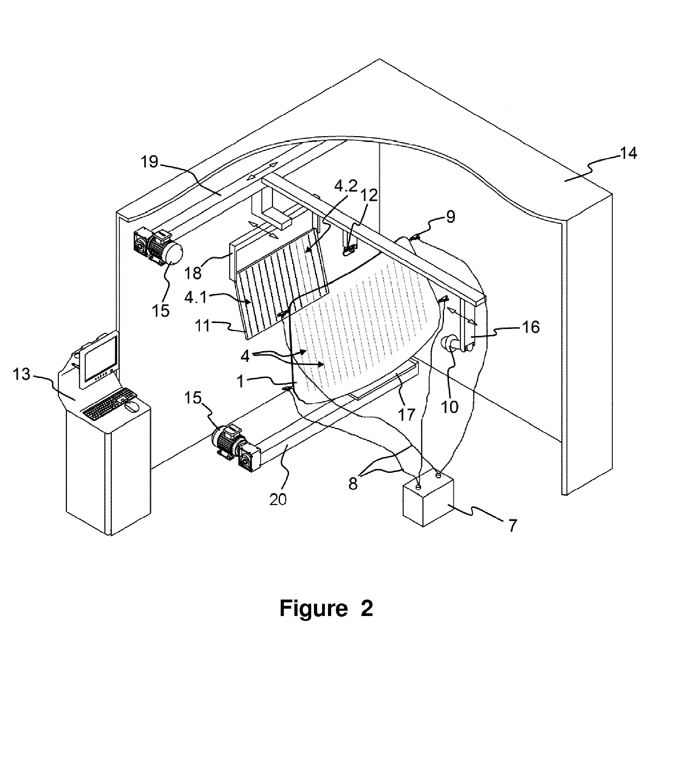

Figure 2 is the perspective view of the system enabling the control method according to the present invention to be performed. Dark environment is required in order for the method according to the present invention to be performed appropriately. Therefore, a medium separated from the outer environment is created by means of a cabinet (14). The laminated glass (1) is positioned on the carrier member (17) moving on the carrier body (20). An energy source (7) is used for providing energy for the laminated glass (1). Providing energy for the laminated glass (1) from the energy source (7) is performed by means of conductive cables (8). An end of the conductive cables (8) is connected to energy source (7) and the other end thereof is connected to the conductive member (5) on the laminated glass (1) via ratchets (9). The energy is made to pass through the resistance wires (4) within the laminated glass (1) by providing energy for the laminated glass (1) from the energy source (7).

A light source (10) placed at a certain distance from the laminated glass (1) is provided. However, a reflection surface (11) enabling the shadow image that will be created by the light, to be seen clearly is positioned on the other side of the glass (1).

The shadow of the resistance wires (4) on which energy passes through, is made to be reflected on the reflection surface (11) thanks to the light emitting from the light source (10). Therefore, the shadow images of resistance wires (4) on the reflection surface (11) are made to be seen bigger than the real sizes thereof on the glass (1). The resistance wires (4) with energy passing thereon create thick and dark shadow (4.1) on the reflection surface (11), while the wires (4) without energy thereon create thin and faint shadow (4.2). Therefore, whether the resistance wires (4) are secured or broken is determined.

The shadows created on the reflection surface (11) are read by means of an imaging device (12). Said imaging device (12) functions as being connected to a control board (13). The images received from the imaging device (12) are transferred to the control board (13) and control as automation is ensured thanks to the camera software and PC and/or PLC hardware installed on the control board (13). Moreover, the energy source (7) is connected to the control board (13) and thus, it can be controlled in the form of automation.

Although the whole image of the laminated glass (1) can be received partial reading may be performed due to the reasons such as reading quality and the size of glass (1). Therefore, the carrier member (17) carrying the laminated glass (1) is made to move on the carrier body (20) or the carrier body (19) carrying the light source (10), imaging device (12) and reflection surface (11) by means of drive members (15). The sizes of the shadows occurring and the extent of the section to be read can be adjusted thanks to the back and forth motion of the carrier member (16) carrying the light source (10) and/or carrier member (18) carrying the reflection surface (11).

The present invention is a method that is generally used as vehicle windshield, which enables to control the suitability of laminated glasses (1) comprised of an outer glass (2), an inner glass (3), a binding layer (6), a conductive member (5) and resistance wires (4), and enables to control the suitability of laminated glasses (1), and **characterised in that** it comprises the following process steps;
- Providing energy for the laminated glass (1) via an energy source (7),
- Reflecting the shadows of resistance wires (4) on the energized laminated glass (1) on a reflection surface (11) via a light source (10),
- Performing suitability control in accordance with the shadows read on reflection surface (11).

Thanks to the system according to the present invention, whether the resistance wires (4) within the laminated glass (1) are broken or secured, the positions thereof on the glass (1), distances between thereof and the heat density differences created can be detected. Therefore, a control method that can function in serial production is applied and a correct control is performed.

## Claims

1. The present invention is a system that is generally used as vehicle windshield, which enables to control the suitability of laminated glasses (1), comprised of an outer glass (2), an inner glass (3), a binding layer (6), a conductive member (5) and resistance wires (4), and ***characterized in that*** it comprises;
• An energy source (7) providing energy for said laminated glass (1),
• Conductive cables (8) transferring the energy received from energy source (7) to the laminated glass (1),
• A light source (10) enabling the images of resistance wires (4) on said laminated glass (1) to be reflected,
• A reflection surface (11) through which the image of laminated glass (1) is reflected.

2. System according to Claim 1, **characterized in that** it comprises energy transfer ratchet (9) in order to connect said conductive cables (8) with the conductive member (5) provided on the laminated glass (1).

3. System according to Claim 1, **characterized in that** it comprises a cabinet (14) enabling the environment to be dark and surrounding the embodiment in order for the control to be performed more accurately.

4. System according to Claim 1, **characterized in that** it comprises a control board (13) in order for said control to be performed in the form of automation.

5. System according to Claim 4, **characterized in that** it comprises an imaging device (12) that transfers the images received from the reflection surface (11) to the control board (13) by being connected to said control board (13).

6. System according to Claim 1, **characterized in that** it comprises a carrier member (17), on which laminated glass (1) is positioned and which has the mobility for partial imaging and is positioned on a carrier body (20).

7. System according to Claims 1 and 6, **characterized in that** it comprises a carrier member (19), on which light source (10), reflection surface (11) and imaging device (12) are connected and which has mobility for partial imaging.

8. System according to Claims 7 and 8, **characterized in that** it comprises drive member (15) providing motion for said carrier member (17) and carrier body (19).

9. The present invention is a method that is generally used as vehicle windshield, which enables to control the suitability of laminated glasses (1), comprised of an outer glass (2), an inner glass (3), a binding layer (6), a conductive member (5) and resistance wires (4), and ***characterized in that*** it comprises the following process steps;
• Providing energy for the laminated glass (1) via an energy source (7),
• Reflecting the shadows of resistance wires (4) on the energized laminated glass (1) on a reflection surface (11) via a light source (10),
• Performing suitability control in accordance with the shadow images read on reflection surface (11).

10. Method according to Claim 9, **characterized in that** it comprises the process step of transferring shadow images occurring on the reflection surface (11) to the control board (13) by means of an imaging device (12).

11. Method according to Claim 9, **characterized in that** the suitability control of shadow images received from the imaging device (12) is performed by being evaluated by means of camera software and PC and/or PLC hardware installed on the control board (13).
